# EUROPEAN PATENT APPLICATION

(11) **EP 4 776 384 A1**
(43) Date of publication of application: **15.07.2026**
(21) Application number: 25861734.9
(22) Date of filing: 21.04.2025
(51) Int. Cl.: H01M 10/613, H01M 10/6557, H01M 10/643

(54) **LIQUID COOLING ASSEMBLY, BATTERY MODULE, AND BATTERY PACK**

(30) Priority: 19.11.2024 CN 202422825474 U
(71) Applicant: Eve Energy Co., Ltd, Huizhou, Guangdong 516006 (CN)
(72) Inventor: ZHOU, Hongquan, Huizhou, Guangdong 516006 (CN); ZHONG, Yu, Huizhou, Guangdong 516006 (CN); YANG, Peng, Huizhou, Guangdong 516006 (CN)
(74) Representative: Nederlandsch Octrooibureau
(86) International application number: PCT/CN2025/090191
(87) International publication number: WO 2026/108073

(57) **Abstract**

Provided are a liquid cooling assembly, a battery module, and a battery pack. The liquid cooling assembly includes a heat exchange unit and a connecting tube assembly. A respective cylindrical battery column is mounted between two adjacent heat exchange sections of the heat exchange unit. A flow channel of each heat exchange section has a fluid inlet and a fluid outlet. A fluid inlet branch tube of the connecting tube assembly is in communication with multiple fluid inlets. An inlet of the fluid inlet branch tube is disposed away from two heat exchange sections respectively located at two side edges of the multiple heat exchange sections. A fluid outlet branch tube of the connecting tube assembly is in communication with multiple fluid outlets. The fluid outlet branch tube is formed with an outlet.

## Description

This application claims priority to Chinese Patent Application No. 2024228254741, filed on November 19, 2024 with the China National Intellectual Property Administration, the entire contents of which are incorporated herein by reference.

### Technical Field

The present invention relates to energy storage technology, specifically to a liquid cooling assembly, a battery module, and a battery pack.

### Background

The safety of battery packs primarily depends on their heat dissipation capabilities. In related art, liquid cooling assemblies are typically used to cool high-energy-density battery packs.

### Summary

However, the current liquid cooling assemblies have poor uniformity in the flow of coolant.

In a first aspect, the present invention provides a liquid cooling assembly. The liquid cooling assembly includes a heat exchange unit and a connecting tube assembly.

The heat exchange unit includes multiple heat exchange sections arranged at intervals along an X-direction, where the space between two adjacent ones of the heat exchange sections is configured to accommodate a cylindrical battery column, each of the two adjacent heat exchange sections is configured to be thermally connected to the cylindrical battery column, and each heat exchange section is formed with a flow channel, each flow channel having a fluid inlet and a fluid outlet.

The connecting tube assembly includes a fluid inlet branch tube and a fluid outlet branch tube, where the fluid inlet branch tube is in communication with multiple fluid inlets of the heat exchange sections in sequence, the fluid inlet branch tube is formed with an inlet, the inlet is configured to allow coolant to flow in, and the inlet is disposed away from two heat exchange sections respectively located at two side edges of the heat exchange sections, and where the fluid outlet branch tube is in communication with multiple fluid outlets of the heat exchange sections in sequence, one end of the fluid outlet branch tube is provided with an outlet, and the outlet is configured to allow the coolant to flow out.

In a second aspect, the present invention also provides a battery module. The battery module includes at least two battery assemblies spaced apart along a Z-direction.

Each of the at least two battery assemblies includes a substrate, a cylindrical battery array, and a liquid cooling assembly.

The cylindrical battery array is mounted on the substrate, the cylindrical battery array including multiple cylindrical battery columns spaced apart along an X-direction.

The liquid cooling assembly is mounted on the substrate, a respective one of the cylindrical battery columns is mounted between two adjacent ones of the heat exchange sections, and each of the two adjacent heat exchange sections is thermally connected to a side wall of the cylindrical battery column.

In a third aspect, the present invention also provides a battery pack. The battery pack includes the battery module.

### Advantages

In the embodiments of the present invention, the inlet of the fluid inlet branch tube is positioned away from the two heat exchange sections respectively located at the side edges of the multiple heat exchange sections, and the outlet is disposed at one end of the fluid outlet branch tube. This layout helps ensure that coolant maintains a relatively stable flow rate and pressure as it flows through all the heat exchange sections, thereby optimizing cooling efficiency. The inlet is positioned away from the two heat exchange sections respectively located at the side edges of the multiple heat exchange sections, which helps reduce pressure drop differences caused by variations in tube length. Thus, it ensures that each heat exchange section can receive sufficient coolant flow, improving the uniformity of coolant flow distribution. As a result, each heat exchange section can more effectively absorb and conduct heat, thereby enhancing the thermal exchange efficiency of the liquid cooling assembly.

In the embodiments of the present invention, the inlet is positioned away from the two heat exchange sections located at the side edges of the multiple heat exchange sections, which helps reduce pressure drop differences caused by variations in tube length. Thus, it ensures that each heat exchange section can receive sufficient coolant flow, improving the uniformity of coolant flow distribution. As a result, each heat exchange section can more effectively absorb and conduct heat, thereby enhancing the thermal exchange efficiency of the liquid cooling assembly. The design of the coolant flow paths and heat exchange sections allows the battery module to achieve modular assembly and expansion while maintaining efficient thermal management. This means that the scale and layout of the battery module can be flexibly adjusted according to different power requirements and space constraints. The modular design of the battery assemblies makes the entire battery module more stable and reliable. Each battery assembly can operate independently. If one battery assembly fails, it can be replaced or repaired individually without affecting the normal operation of other battery assemblies. The substrate provides a stable support platform for the cylindrical battery array and the liquid cooling assembly, helping to reduce the impact of vibrations and shocks on the battery module and enhance the overall structural stability and safety.

### Brief Description of the Drawings

FIG. 1 is a structural schematic diagram of a liquid cooling assembly according to some possible embodiments of the present application.
FIG. 2 is a structural schematic diagram of a heat exchange section shown in FIG. 1.
FIG. 3 is a partially enlarged view of area A shown in FIG. 2.
FIG. 4 is a structural schematic diagram of a battery module according to some possible embodiments of the present application.
FIG. 5 is a partially enlarged view of area B shown in FIG. 4.
FIG. 6 is a front view of the battery module shown in FIG. 4.
FIG. 7 is a structural schematic diagram of a substrate shown in FIG. 4.

Reference signs are as follows:
1000, battery module; 100, battery assembly; 10, liquid cooling assembly; 1, heat exchange unit; 11, heat exchange section; 110, flow channel; 111, fluid inlet; 112, fluid outlet; 113, arc segment; 2, connecting tube assembly; 21, fluid inlet branch tube; 211, inlet; 22, fluid outlet branch tube; 221, outlet; 3, housing space; 20, substrate; 201, through hole; 30, cylindrical battery array; 301, cylindrical battery column; 3011, cylindrical battery cell; 30111, pressure relief valve; 40, support section; 50, liquid cooling section; 60, fluid delivery tube assembly; 601, input tube; 6011, first input end; 6012, first output end; 6013, input main tube; 6014, input branch tube; 602, output tube; 6021, second output end; 6022, second input end; 6023, output main tube; 6024, output branch tube; 701, limiting slot; 702, limiting protrusion.

### Detailed Description

The safety of battery packs primarily lies in their heat dissipation capabilities. In related art, liquid cooling assemblies are typically used to cool high-energy-density battery packs. However, current liquid cooling assemblies suffer from poor uniformity in the flow of coolant.

In view of this, the present application provides a liquid cooling assembly. The liquid cooling assembly provided by the present application achieves efficient cooling of a high-energy-density battery pack while ensuring uniformity of coolant flow distribution. The liquid cooling assembly will now be described in detail with reference to the main figures.

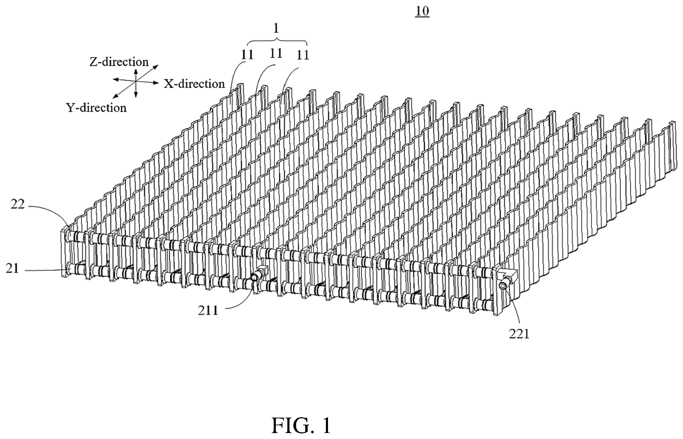

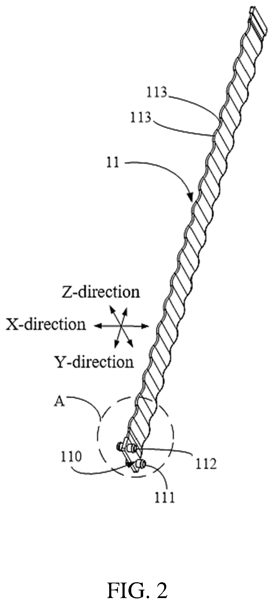

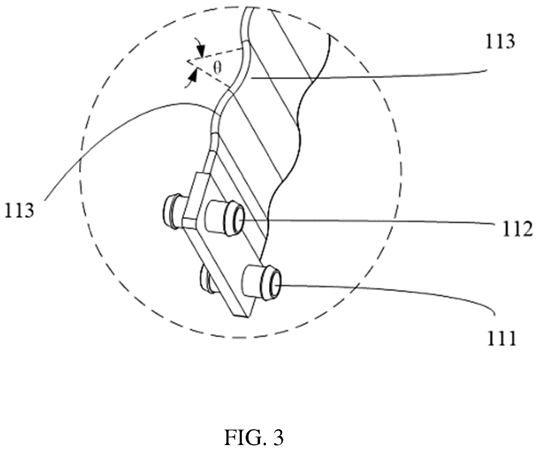

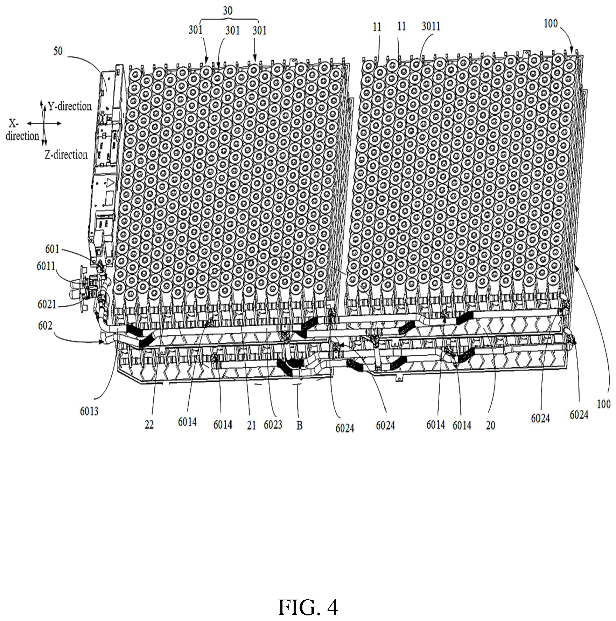

Referring to FIGS. 1 to 3, FIG. 1 is a structural schematic diagram of a liquid cooling assembly according to some embodiments of the present application, FIG. 2 is a structural schematic diagram of a heat exchange section shown in FIG. 1, and FIG. 3 is a partially enlarged view of area A shown in FIG. 2. The liquid cooling assembly 10 includes a heat exchange unit 1 and a connecting tube assembly 2. The heat exchange unit 1 includes multiple heat exchange sections 11 arranged at intervals along the X-direction. The space between two adjacent ones of the multiple heat exchange sections 11 is configured to accommodate a corresponding cylindrical battery column 301 (shown in FIG. 4). Each heat exchange section 11 is configured to be thermally connected to one or more corresponding cylindrical battery columns 301. Each heat exchange section 11 is formed with a flow channel 110, and the flow channel 110 has a fluid inlet 111 and a fluid outlet 112. The connecting tube assembly 2 includes a fluid inlet branch tube 21 and a fluid outlet branch tube 22. The fluid inlet branch tube 21 is in communication with multiple fluid inlets 111 in sequence. The fluid inlet branch tube 21 is provided with an inlet 211, and the inlet 211 is configured to allow coolant to flow in. The inlet 211 is disposed away from two heat exchange sections 11 respectively located at the two side edges of the multiple heat exchange sections 11. The fluid outlet branch tube 22 is sequentially in communication with multiple fluid outlets 112. One end of the fluid outlet branch tube 22 is provided with an outlet 221, and the outlet 221 is configured to allow coolant to flow out.

In the embodiments of the present application, the multiple heat exchange sections 11 arranged at intervals along the X-direction can effectively increase the contact area with cylindrical battery columns 301, thereby improving the efficiency of heat exchange. This design ensures that the heat generated by the cylindrical battery columns 301 during charging and discharging can be quickly and uniformly absorbed and conducted. Each heat exchange section 11 is thermally connected to one or more corresponding cylindrical battery columns 301, which means that heat can be directly transferred from the cylindrical battery column 301 to the heat exchange section 11, reducing thermal resistance and improving heat transfer efficiency. The flow channel 110 formed within each heat exchange section 11 allows coolant to flow and circulate within the heat exchange section 11, thereby continuously absorbing and removing heat. The design of the fluid inlet branch tube 21 and fluid outlet branch tube 22 allows multiple flow channels 110 to be arranged in parallel, enabling coolant to enter and exit multiple heat exchange sections 11 simultaneously. This ensures that each heat exchange section 11 receives adequate cooling, thereby preventing localized overheating. This uniform heat dissipation approach enhances the overall thermal management efficiency of the liquid cooling assembly 10. When cylindrical battery columns 301 generate a large amount of heat, coolant can quickly flow through each heat exchange section 11 to remove the heat, achieving rapid cooling and maintaining the cylindrical battery columns 301 within an appropriate operating temperature range. The inlet 211 of the fluid inlet branch tube 21 is positioned away from the two heat exchange sections 11 respectively located at the side edges of the multiple heat exchange sections 11, the outlet 221 is disposed at one end of the fluid outlet branch tube 22, and this layout helps ensure that coolant maintains a relatively stable flow rate and pressure as it flows through all the heat exchange sections 11, thereby optimizing cooling efficiency. The inlet 211 is positioned away from the two heat exchange sections 11 respectively located at the side edges of the multiple heat exchange sections 11, which helps reduce pressure drop differences caused by variations in tube length. This ensures that each heat exchange section 11 can receive sufficient coolant flow, improving the uniformity of coolant flow distribution. As a result, each heat exchange section 11 can more effectively absorb and conduct heat, thereby enhancing the thermal exchange efficiency of the liquid cooling assembly. Additionally, due to the high energy density of a battery pack, the cylindrical battery column 301 at the center position of the battery pack along the X-direction typically has a higher temperature. The inlet 211 is disposed away from the two heat exchange sections 11 respectively located at the side edges of the multiple heat exchange sections 11, which enables rapid cooling of the cylindrical battery column 301 at the center position, thereby reducing temperature differences among multiple cylindrical battery columns 301 within the battery pack. The inlet 211 is positioned away from the two heat exchange sections 11 at the side edges of the multiple heat exchange sections 11 and one end of the fluid outlet branch tube is provided with the outlet 221, and thus these arrangements simplify the tube layout, reduce the number of tube crossings and needed connection components, and lower the system's complexity and failure rate.

Referring to FIG. 2, in some embodiments, each flow channel 110 is curved, and the fluid inlet 111 and fluid outlet 112 of each heat exchange section 11 are located at the same end of the heat exchange section 11. This compact layout helps save space, enabling the entire liquid cooling assembly 10 to achieve efficient thermal management within a limited space. The curved flow channel 110 has a longer cooling path compared to a straight channel, meaning that coolant remains in the flow channel 110 for a longer time, thereby increasing the time of heat exchange with the heat exchange section 11 and improving heat exchange efficiency. The curved channel design helps generate turbulence during coolant flow, which enhances coolant mixing and agitation, further improving heat exchange efficiency. Since the fluid inlet 111 and fluid outlet 112 are located at the same end of the heat exchange section 11, the number of tube connection components can be reduced, thereby simplifying the liquid cooling assembly and lowering its failure rate.

Referring to FIGS. 2 and 3, in some embodiments, the fluid inlet 111 and the fluid outlet 112 are spaced apart along the Z-direction, with the Z-direction parallel to the axial direction of cylindrical battery cells 3011 in the cylindrical battery columns 301. The fluid inlet 111 is disposed close to the bottom of the cylindrical battery columns 301. During operation, the bottom of the cylindrical battery cells 3011 is often a region where heat concentrates. By positioning the fluid inlet 111 close to the bottom of adjacent cylindrical battery columns 301, coolant can first come into contact with these high-temperature areas, quickly dissipating heat and reducing the temperature of the cylindrical battery columns 301, thereby improving thermal management efficiency. By introducing coolant at the bottom, relatively cool coolant first exchanges heat with the bottom of cylindrical battery columns 301, absorbing a large amount of heat from the bottom of the cylindrical battery columns 301. After heat exchange, the temperature of the coolant increases, and the coolant continues to flow upward, exchanging heat with the middle position of the cylindrical battery columns 301 and absorbing part of the heat from the middle position of the cylindrical battery columns 301. After heat exchange, the temperature of the coolant increases, and the coolant continues to flow upward, where the coolant exchanges heat with the top of the cylindrical battery columns 301, absorbing a small amount of heat from the top of the cylindrical battery columns 301. In this way, the temperature distribution at the bottom, middle, and top of the cylindrical battery columns 301 becomes more uniform, improving the performance and stability of the cylindrical battery columns 301.

Referring to FIG. 2, in some embodiments, each heat exchange section 11 is arranged to extend in a back-and-forth curved manner along the X-direction, and thereby the heat exchange section 11 is formed with multiple arc segments 113. The arc segments 113 are thermally connected to the side wall of one or more corresponding cylindrical battery columns 301. Thus, through the thermal connection between the arc segments 113 and the side wall of the cylindrical battery columns 301, the contact area between the heat exchange section 11 and the side wall of the cylindrical battery columns 301 is significantly increased. More contact points mean more heat transfer paths, thereby improving heat exchange efficiency. The arc segment 113 can better conform to the curved surface of a single cylindrical battery cell 3011, reducing thermal resistance caused by poor contact and enabling heat to be more smoothly transferred from the cylindrical battery column 301 to the heat exchange section 11. Through the uniform contact of the multiple arc segments 113 with the side wall of the cylindrical battery columns 301, the heat exchange sections 11 can more effectively absorb the heat from the cylindrical battery columns 301, achieving rapid cooling of the cylindrical battery columns 301.

It is to be noted that as a cylindrical battery cell 3011 undergoes charge-discharge cycles, the cylindrical battery cell 3011 may expand to some extent. By designing the curved heat exchange section 11 with a certain degree of elasticity, the curved heat exchange section 11 can better accommodate the expansion of the cylindrical battery cell 3011, thereby maintaining stable heat exchange performance.

Referring to FIG. 3, in some embodiments, two ends of each arc segment 113 are configured such that an angle θ is defined between two connecting lines, each connecting line connecting the axis of a cylindrical battery cell 3011 in the cylindrical battery column 301 to a respective one of the two ends, where θ > 72°. As the angle θ increases, the contact area between the arc segment 113 and the side wall of the cylindrical battery column 301 also increases accordingly. When the two ends of each arc segment 113 are configured such that the angle greater than 72° is defined between two connecting lines, each connecting line connecting the axis of a corresponding cylindrical battery cell 3011 in the cylindrical battery column 301 to a respective one of the two ends, the arc segment 113 has a larger contact area with the side wall of the cylindrical battery column 301, thereby improving the heat transfer efficiency between the arc segment 113 and the side wall of the cylindrical battery column 301, enabling faster dissipation of heat generated by the cylindrical battery column 301 and maintaining the cylindrical battery column 301 within an appropriate operating temperature range. When the two ends of each arc segment 113 are configured such that the angle greater than 72° is defined between two connecting lines, each connecting line connecting the axis of a corresponding cylindrical battery cell 3011 in the cylindrical battery column 301 to a respective one of the two ends, this reduces thermal resistance caused by poor contact, allowing heat to be more smoothly transferred from the side wall of the cylindrical battery column 301 to the heat exchange section 11. This helps reduce the temperature inside the battery cell and improves the overall performance of the cylindrical battery column 301. As the cylindrical battery cells 3011 undergo charge-discharge cycles, the cylindrical battery cells 3011 may expand to some extent. When the two ends of each arc segment 113 are configured such that the angle greater than 72° is defined between two connecting lines, each connecting line connecting the axis of a corresponding cylindrical battery cell 3011 in the cylindrical battery column 301 to a respective one of the two ends, this arrangement provides a certain amount of elastic space for the heat exchange section 11, enabling the heat exchange section 11 to better adapt to the expansion of the cylindrical battery cells 3011 and maintaining stable heat exchange performance. Under the combined effects of thermal stress and mechanical stress, the heat exchange section 11 may experience stress concentration. When the two ends of each arc segment 113 are configured such that the angle greater than 72° is defined between two connecting lines, each connecting line connecting the axis of a corresponding cylindrical battery cell 3011 in the cylindrical battery column 301 to a respective one of the two ends, this arrangement helps distribute the stress, reduce the risk of stress concentration, and enhance the overall reliability of the liquid cooling assembly 10.

Additionally, When the two ends of each arc segment 113 are configured such that the angle less than 72° is defined between two connecting lines, each connecting line connecting the axis of a corresponding cylindrical battery cell 3011 in the cylindrical battery column 301 to a respective one of the two ends, the heat transfer efficiency between the heat exchange section 11 and the side wall of the cylindrical battery column 301 is reduced. This may result in the heat generated by the cylindrical battery cells 3011 not being effectively dissipated in a timely manner, potentially causing an increase in the temperature of the cylindrical battery cells 3011, which may affect their performance and service life. Due to the relatively small contact area, this may also lead to increased temperature differences within the cylindrical battery cells 3011. This uneven temperature distribution may accelerate the aging process of the cylindrical battery cells 3011 and even cause localized overheating, damaging the cylindrical battery cells 3011.

It is to be noted that the two ends of each arc segment 113 are configured such that an angle is defined between two connecting lines, each connecting line connecting the axis of a corresponding cylindrical battery cell 3011 in the cylindrical battery column 301 to a respective one of the two ends, and the angle may be 73°, 75°, 80°, 85°, 89°, 90°, 96°, 100°, 110°, 120°, or 130°, among others. In some embodiments, the two ends of each arc segment 113 are configured such that the angle is defined between two connecting lines, each connecting line connecting the axis of a corresponding cylindrical battery cell 3011 in the cylindrical battery column 301 to a respective one of the two ends, and the angle may be set as needed. The present application is not limited thereto. Additionally, in some embodiments, each arc segment 113 may be an arc segment with a single curvature. In further embodiments, each arc segment 113 may be an arc segment with two curvatures or three curvatures. In some embodiments, it is not limited thereto.

In some embodiments, each arc segment 113 is provided with a thermally conductive structural adhesive, and the arc segment 113 is thermally connected to the side wall of a corresponding cylindrical battery column 301 via the thermally conductive structural adhesive. Thus, the thermally conductive structural adhesive, as a high-thermal-conductivity material, can rapidly transfer the heat generated by the cylindrical battery column 301 from its side wall to the heat exchange section 11. This efficient heat conduction capability helps maintain the cylindrical battery column 301 within an appropriate operating temperature range, preventing performance degradation or safety hazards in the cylindrical battery cells 3011 due to excessive temperature. The thermal conductive structural adhesive ensures good contact between the side wall of the cylindrical battery column 301 and the heat exchange section 11, facilitating uniform heat transfer and distribution, reducing temperature gradients within the cylindrical battery cells 3011, and improving the overall performance and service life of the cylindrical battery cells 3011. The thermal conductive structural adhesive possesses excellent bonding properties, ensuring a secure connection between the arc segment 113 and the side wall of the cylindrical battery column 301. This helps prevent the cylindrical battery cells 3011 from loosening or detaching under vibration or impact conditions.

It should be noted that in some other embodiments, each arc segment 113 may also be directly in contact with the side wall of a corresponding cylindrical battery column 301, enabling direct heat transfer from the side wall of the cylindrical battery column 301 to the arc segment 113. In other embodiments, each arc segment 113 may also be thermally connected to the side wall of a corresponding cylindrical battery column 301 via a heat-conducting member. The heat-conducting member may include heat-conducting ceramics or heat-conducting metals, among others. In some embodiments, the present application does not limit the type of heat-conducting member.

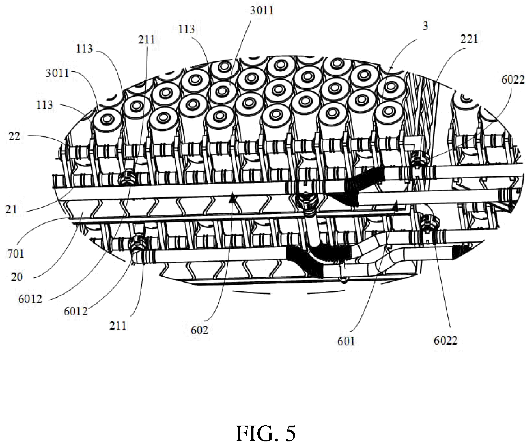

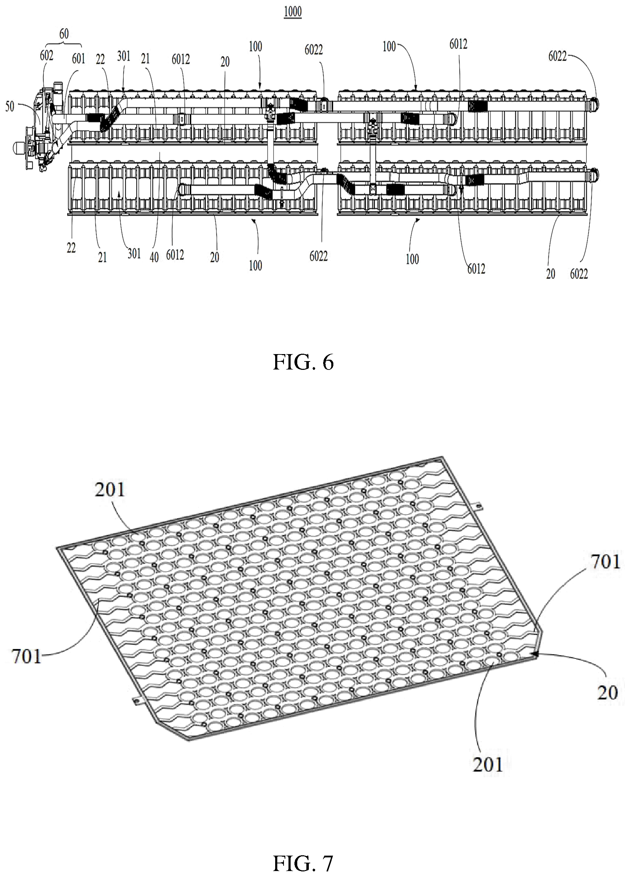

Referring to FIGS. 4 to 7, FIG. 4 is a structural schematic diagram of a battery module according to some embodiments of the present application, FIG. 5 is a partially enlarged view of area B shown in FIG. 4, FIG. 6 is a front view of the battery module shown in FIG. 4, and FIG. 7 is a structural schematic diagram of a substrate shown in FIG. 4. Some embodiments of the present application also provide a battery module 1000. The battery module 1000 includes at least two battery assemblies 100 arranged spaced apart along the Z-direction. Each battery assembly 100 includes a substrate 20, a cylindrical battery array 30, and a liquid cooling assembly 10. The cylindrical battery array 30 is mounted on the substrate 20. The cylindrical battery array 30 includes multiple cylindrical battery columns 301 spaced apart along the X-direction. The liquid cooling assembly 10 is mounted on the substrate 20. Each cylindrical battery column 301 is provided between two adjacent ones of the cylindrical battery columns 301, and each heat exchange section 11 is thermally connected to the side wall of the cylindrical battery column 301.

In the embodiments of the present application, the heat exchange section 11 is thermally connected to the side wall of the cylindrical battery column 301, ensuring that heat can be quickly transferred from the cylindrical battery column 301 to the heat exchange section 11, and thereby improving heat transfer efficiency. Coolant enters the inlet 211 of the fluid inlet branch tube 21, which is away from the two heat exchange sections 11 at the side edges of multiple heat exchange sections 11, and then flows into flow channels 110 of the multiple heat exchange sections 11. The coolant in the flow channels 110 exchanges heat with cylindrical battery columns 301. After heat exchange, the warmed coolant flows from multiple fluid outlets 112 to the fluid outlet branch tube 22 and is discharged through the outlet 221. This layout helps ensure that coolant can maintain relatively stable flow rate and pressure as the coolant flows through all heat exchange sections 11, thereby optimizing cooling efficiency. The inlet 211 is positioned away from the two heat exchange sections 11 located at the side edges of the multiple heat exchange sections 11, which helps reduce pressure drop differences caused by variations in tube length. Thus, it ensures that each heat exchange section 11 can receive sufficient coolant flow, improving the uniformity of coolant flow distribution. As a result, each heat exchange section 11 can more effectively absorb and conduct heat, thereby enhancing the thermal exchange efficiency of the liquid cooling assembly. Additionally, due to the high energy density of a battery pack, the cylindrical battery column 301 at the center position of the battery pack along the X-direction typically has a relatively high temperature. The inlet 211 is disposed away from the two heat exchange sections 11 respectively located at the side edges of the multiple heat exchange sections 11, which enables rapid cooling of the cylindrical battery column 301 at the center position, thereby reducing temperature differences among the multiple cylindrical battery columns 301 within the battery pack. The inlet 211 is positioned away from the two heat exchange sections 11 at the side edges of the multiple heat exchange sections 11 and one end of the fluid outlet branch tube is provided with the outlet 221, and thus these arrangements simplify the tube layout, reduce the number of tube crossings and needed connection components, and lower the system's complexity and failure rate. The design of coolant flow paths and heat exchange sections 11 allows the battery module 1000 to achieve modular assembly and expansion while maintaining efficient thermal management. This means that the scale and layout of the battery module 1000 can be flexibly adjusted according to different power requirements and space constraints. The modular design of the battery assemblies 100 makes the entire battery module 1000 more stable and reliable. Each battery assembly 100 can operate independently. If one battery assembly fails, it can be replaced or repaired individually without affecting the normal operation of other battery assemblies. The substrate 20 provides a stable support platform for the cylindrical battery array 30 and the liquid cooling assembly 10, helping to reduce the impact of vibrations and shocks on the battery module 1000 and enhance the overall structural stability and safety.

It should be noted that the number of battery assemblies 100 may be conveniently increased or decreased according to actual requirements to accommodate different power demands and space constraints. The number of battery assemblies 100 may be set to two, three, four, or more, and some embodiments of the present application do not impose any limitations in this regard.

Referring to FIGS. 6 and 7, in some embodiments, each cylindrical battery column 301 includes multiple cylindrical battery cells 3011 arranged sequentially along the Y-direction. A pressure relief valve 30111 is provided on a side of each cylindrical battery cell 3011 facing the substrate 20. The substrate 20 is provided with multiple through holes 201, the multiple through holes 201 disposed opposite multiple pressure relief valves 30111 in one-to-one correspondence, where each through hole 201 is disposed opposite a corresponding pressure relief valve 30111 along the Z-direction. Thus, when a large amount of gas is generated inside the cylindrical battery cell 3011 due to overpressure, overheating, or other reasons, the pressure relief valve 30111 can be quickly opened and release pressure. Since the through holes 201 are disposed opposite the pressure relief valves 30111, this design ensures that gas can be directly and quickly discharged through the through holes 201, preventing gas from accumulating inside the cylindrical battery cells 3011 and causing excessive internal pressure of the cylindrical battery cells 3011 that could lead to explosion or fire. Timely release of pressure inside the cylindrical battery cells 3011 can also reduce the risk of thermal runaway of the cylindrical battery cells 3011 caused by high temperature and pressure, thereby enhancing the safety of the battery module 1000. The presence of through holes 201 also reduces thermal resistance between the substrate 20 and the cylindrical battery cells 3011, enabling heat generated by the cylindrical battery cells 3011 to be more smoothly transferred to the substrate 20 and dissipated through other heat dissipation pathways, thereby preventing excessive heat accumulation. When a cylindrical battery cell 3011 experiences abnormal conditions, such as the pressure relief valve 30111 is opened to release gas or produces smoke, these phenomena can be directly observed through the through-holes 201 on the substrate 20. This helps maintenance personnel quickly locate the faulty cylindrical battery cell 3011 and take appropriate action.

Referring to FIG. 6, in some embodiments, the battery module 1000 further includes multiple support sections 40, each support section 40 disposed between two adjacent battery assemblies 100. Thus, the multiple support sections 40 provide additional support to the entire battery module 1000, helping to prevent the battery module 1000 from shifting or deforming during transportation, installation, or use, thereby enhancing the overall structural stability and safety. The support sections 40 have cavities formed therein. A side of each support section 40 facing the substrate 20 is provided with multiple connection holes in communication with the cavity of the support section 40. The multiple connection holes are in one-to-one correspondence with and in communication with the multiple through holes 201. Each support section 40 is further provided with an exhaust port 221 in communication with the cavity. Thus, when a cylindrical battery cell 3011 undergoes thermal runaway, the internal pressure of the cylindrical battery cell 3011 increases, and high-pressure gas is discharged through the corresponding pressure relief valve 30111, then passes through the corresponding through hole 201 and connection hole into the cavity, and is discharged through the exhaust port 221. It significantly reduces the risk of explosion of the cylindrical battery cell 3011, and prevents high-pressure gas from directly impacting the opposing battery assembly 100 and causing damage to the battery assembly 100. Additionally, high-pressure gas discharged from multiple cylindrical battery cells 3011 converges in the cavity and then is expelled through the exhaust port 221. This reduces the number of external connectors and tubes. This not only simplifies the design of battery module 1000 but also enhances its integration and compactness. The design of the cavity effectively utilizes the space between adjacent battery assemblies 100, avoiding space waste caused by separately setting pressure relief channels. This is of significant importance for improving the energy density and range of the entire battery module 1000. This unified exhaust port 221 also enhances the safety of the battery module 1000.

In some embodiments, along the Z-direction, the height of the cavity is H, where 4 mm ≤ H ≤ 10 mm. Thus, within this height range, the cavity can provide a sufficient space to buffer the high-pressure gas generated by the cylindrical battery cell 3011 during thermal runaway, thereby helping to prevent the risk of sudden excessive gas pressure, which could cause damage to the support section 40 or the battery assembly 100 adjacent to the support section 40. The design of the cavity height between 4 mm and 10 mm effectively utilizes the internal space of the battery module 1000, avoiding unnecessary space waste. This helps improve the overall compactness of the battery module 1000, enhancing energy density and range capability.

It should be noted that when the height of the cavity is less than 4 mm, the pressure of the gas discharged through the through hole 201 may be too high, which potentially causes damage to the support section 40 or the battery assembly 100 adjacent to the support section 40. When the height of the cavity is greater than 10 mm, there is a risk of space wastage, which reduces the energy density and range capability of the battery module 1000 under the same volume of the battery module 1000. Additionally, the height of the cavity may be 4 mm, 4.5 mm, 4.8 mm, 5 mm, 5.2 mm, 5.8 mm, 6 mm, 6.5 mm, 7 mm, 7.8 mm, 8 mm, 8.4 mm, 9 mm, 9.6 mm, or 10 mm.

Referring to FIGS. 4 and 6, in some embodiments, the battery module 1000 further includes a liquid cooling section 50 and a fluid delivery tube assembly 60. A fluid storage cavity is formed with the liquid cooling section 50 and is configured to store coolant. The liquid cooling section 50 is formed with an inlet 211 and an outlet 221 which are in communication with the fluid storage cavity. The fluid delivery tube assembly 60 includes an input tube 601 and an output tube 602. The input tube 601 has a first input end 6011 and multiple first output ends 6012. The first input end 6011 is in communication with the outlet 221, and the multiple first output ends 6012 are respectively in communication with multiple inlets 211. The output tube 602 has a second output end 6021 and multiple second input ends 6022. The second output end 6021 is in communication with the inlet 211, and the multiple second input ends 6022 are respectively in communication with multiple outlets 221. In this way, the fluid storage cavity within the liquid cooling section 50 stores coolant, and coolant at a lower temperature flows out from the outlet 221 and enters the input tube 601 through the first input end 6011. The coolant at a lower temperature is transported by the input tube 601 and flows separately to the multiple first output ends 6012. Then, the coolant at a lower temperature flows through multiple inlets 211 to multiple fluid inlet branch tubes 21 of multiple liquid cooling assemblies 10. The coolant at a lower temperature entering each fluid inlet branch tube 21 can enter a corresponding heat exchange section 11 from the fluid inlet 111 of the flow channel 110 and reduce the temperature of the heat exchange section 11. After the heat exchange between the lower-temperature heat exchange section 11 and the cylindrical battery column 301 is completed, the temperature of the cylindrical battery column 301 decreases while the temperature of the coolant in the flow channel 110 increases. The higher-temperature coolant in the multiple flow channels 110 of the multiple liquid cooling assemblies 10 is discharged through multiple fluid outlets 112 to multiple fluid outlet branch tubes 22, and then the higher-temperature coolant in the multiple fluid outlet branch tubes 22 is discharged through multiple outlets 221 to the multiple second input ends 6022 and flows through the second output ends 6021 of the output tube 602 to the inlet 211, enabling the higher-temperature coolant to ultimately return to the fluid storage cavity and be cooled by the liquid cooling section 50, and preparing for subsequent coolant circulation and cooling. The design of the fluid delivery tube assembly 60 enables coolant to be uniformly distributed to the inlet 211 of each battery module 100 and return through the outlet 221, thus forming a closed-loop cooling system. This design helps achieve uniform temperature distribution within the battery module 1000 and reduces the impact of temperature differences on the performance of the battery module 1000. The input tube 601 has the first input end 6011 and the multiple first output ends 6012, while the output tube 602 has the second output end 6021 and the multiple second input ends 6022. This design allows coolant to be flexibly distributed to different battery assemblies 100 according to actual needs. Battery assemblies 100 at different locations in the battery module 1000 may generate different amounts of heat. The multi-channel design enables precise cooling control. The design where multiple battery assemblies 100 share a single liquid cooling section 50 makes full use of the internal space of the battery module 1000 and avoids unnecessary space waste. This design helps improve the energy density and power density of the battery module 1000.

Referring to FIGS. 4 to 6, in some embodiments, the input tube 601 includes an input main tube 6013 and multiple input branch tubes 6014. One end of the input main tube 6013 is formed with the first input end 6011, the input main tube 6013 is connected to one end of the multiple input branch tubes 6014, and the other end of the multiple input branch tubes 6014 is formed with the multiple first output ends 6012. The diameter of the input branch tubes 6014 is smaller than the diameter of the input main tube 6013. Thus, due to the larger diameter of the input main tube 6013, the flow resistance of the coolant in the input main tube 6013 is smaller, which helps maintain a higher flow rate and volume. The smaller diameter of the input branch tubes 6014 allows fluid to be distributed according to actual requirements without affecting the overall flow rate, thereby reducing unnecessary energy consumption. This design helps achieve a more uniform distribution of coolant at the input branch tubes 6014, reducing turbulence and energy loss caused by uneven flow rates. Each input branch tube 6014 may be independently controlled, facilitating precise regulation of coolant supply. The smaller diameter of the input branch tubes 6014 compared to the diameter of the input main tube 6013 allows for reduced material usage while maintaining coolant delivery efficiency, thereby lowering material costs. The smaller input branch tubes 6014 are easier to install and maintain, thus reducing construction difficulty and costs.

Referring to FIGS. 4 to 6, in some embodiments, the output tube 602 includes an output main tube 6023 and multiple output branch tubes 6024. One end of the output main tube 6023 is formed with the second output end 6021, the output main tube 6023 is connected to one end of the multiple output branch tubes 6024, and the other end of the multiple output branch tubes 6024 is formed with the multiple second input ends 6022. The diameter of the output branch tubes 6024 is smaller than the diameter of the output main tube 6023. Thus, the larger diameter of the output main tube 6023 reduces the flow resistance encountered by coolant during the return flow, helping to maintain a higher flow velocity and flow rate, thereby accelerating the coolant circulation speed and improving heat dissipation efficiency. The design of the multiple output branch tubes 6024 enables the coolant to be evenly distributed across all return paths, reducing turbulence and energy loss caused by uneven flow rates, ensuring that each battery module 100 receives adequate cooling. While maintaining overall flow rate and heat dissipation performance, reducing the diameter of the output branch tubes 6024 can decrease material usage and lower material costs. The smaller output branch tubes 6024 are easier to install and maintain, reducing construction difficulty and costs. Additionally, the compact structural design helps save space within the battery module 1000.

It should be noted that by adjusting the number and layout of the output branch tubes 6024, precise control of cooling performance for cylindrical battery cells 3011 or battery assemblies 100 in different areas can be achieved, thereby ensuring more uniform temperature distribution throughout the entire battery module 1000.

Referring to FIGS. 4 and 6, in some embodiments, multiple cylindrical battery arrays 30 are provided and arranged at intervals along the X-direction. This arrangement can effectively increase airflow between the battery arrays, reduce heat accumulation, and thereby improve heat dissipation efficiency. This layout also helps maintain uniform temperature distribution within the battery assemblies 100, preventing performance degradation or safety hazards caused by localized overheating. The arrangement of multiple cylindrical battery arrays 30 spaced apart along the X-direction can maximize the energy density of the battery module 1000 while maintaining heat dissipation performance. The spacing between the cylindrical battery arrays 30 provides the battery module 1000 with a certain buffer space, helping to distribute stress concentration caused by vibrations and impacts on the battery module 1000, thereby enhancing the structural stability of the battery module 1000. When a short circuit occurs inside the battery module 1000, if there is insufficient spacing between the battery arrays, the short-circuit current may rapidly spread and trigger a chain reaction. However, by arranging multiple cylindrical battery arrays 30 at intervals along the X-direction, the spread of the short-circuit current can be restricted to some extent, thereby reducing the risk of short circuits. If a cylindrical battery array 30 in the battery module 1000 fails or its performance degrades, it can be resolved through simple disassembly and replacement operations. The arrangement of multiple cylindrical battery arrays 30 spaced apart along the X-direction makes such operations more convenient and efficient.

It should be noted that multiple cylindrical battery arrays 30 may be employed by using parallel or series connections or in combination thereof to meet different current output requirements. This flexibility enables the battery module 1000 to be applied to a wider range of application scenarios.

Referring to FIG. 5, in some embodiments, the substrate, the adjacent heat exchange sections 11, and the corresponding cylindrical battery columns 301 jointly define a housing space 3, and the housing space 3 is filled with a thermal insulation medium. This arrangement enables the thermal insulation medium to effectively reduce heat convection and radiation within the housing space 3, allowing heat to primarily transfer through direct contact between the heat exchange sections 11 and the cylindrical battery columns 301. This design also optimizes the heat transfer path, enhancing the targeting and efficiency of thermal management. The presence of the thermal insulation medium ensures more uniform temperature distribution within the cylindrical battery columns 301, reducing performance instability of the cylindrical battery cells 3011 caused by temperature fluctuations. This further helps extend the service life of the cylindrical battery cells 3011. The insulation medium also provides some support and cushioning, reducing stress concentration in the cylindrical battery cells 3011 under vibration or impact conditions. This enhances the structural strength of the battery module 1000 and reduces the risk of damage caused by external factors. Under some extreme temperature conditions, the insulation medium maintains its excellent thermal insulation properties, preventing the battery module 1000 from being excessively affected by external temperature changes. This enhances the battery module 1000's adaptability and reliability in extreme environments. The presence of the insulation medium prevents dust and debris from accumulating within the housing space 3, facilitating regular cleaning and inspection. This helps maintain the cleanliness and heat dissipation performance of the battery module, thereby improving the overall reliability of the system.

It should be noted that there are various types of insulation media, such as foam adhesive or resin adhesive. In some embodiments, the type of insulation medium is not limited.

Referring to FIGS. 5 and 7, in some embodiments, a limiting structure is further provided between the substrate 20 and the heat exchange section 11. The limiting structure includes a limiting slot 701 and a limiting protrusion 702 adapted to the limiting slot 701. One of the limiting slot 701 and the limiting protrusion 702 is disposed on the substrate 20, and the other one of the limiting slot 701 and the limiting protrusion 702 is disposed at the heat exchange section 11. Thus, the cooperation between the limiting slot 701 and the limiting protrusion 702 can ensure the precise positioning of the heat exchange section 11 on the substrate 20. This positioning method avoids errors caused by manual operation or mechanical installation, thereby improving assembly precision. During the operation of the battery module 1000, due to factors such as vibration and temperature changes, the heat exchange section 11 may undergo minor displacement. The limiting structure is provided to effectively prevent such displacement, maintaining a stable connection between the heat exchange section 11 and the substrate 20. The limiting structure not only serves a positioning function but also helps distribute stress at the connection point between the heat exchange section 11 and the substrate 20 to some extent. This helps reduce the risk of structural damage caused by stress concentration. By enhancing the connection strength between the heat exchange section 11 and the substrate 20, the limiting structure contributes to improving the structural durability of the entire battery module 1000 and extending its service life. The presence of the limiting structure simplifies and accelerates the installation process of the heat exchange section 11. Operators only need to align the limiting protrusion 702 with the limiting slot 701 and gently push them in to complete the installation, without the need for complex adjustment and fixation steps. The design of the limiting structure helps ensure close contact between the heat exchange section 11 and the substrate 20, thereby maintaining good heat conduction performance. This helps improve the thermal management performance of the entire battery module 1000, ensuring that the temperature distribution within the battery module is uniform and maintained within a safe range.

Some embodiments of the present application also provide a battery pack. The battery pack includes a battery module 1000. The specific structure of the battery module 1000 is referenced in the above embodiments. Since the battery pack adopts all the technical solutions of all the embodiments, the battery pack at least possesses all the beneficial effects brought by the technical solutions of the above embodiments, which are not repeated herein.

Some embodiments of the present application also provide a vehicle. The vehicle includes a battery pack. The specific structure of the battery pack is referenced in the above embodiments. Since the vehicle adopts all the technical solutions of all the embodiments, the vehicle at least possesses all the beneficial effects brought by the technical solutions of the above embodiments, which are not repeated herein.

## Claims

1. A liquid cooling assembly (10), **characterized by** comprising:
a heat exchange unit (1) comprising a plurality of heat exchange sections (11) arranged at intervals along an X-direction, wherein a space between two adjacent ones of the plurality of heat exchange sections (11) is configured to accommodate a cylindrical battery column (301), each of the two adjacent heat exchange sections (11) is configured to be thermally connected to the cylindrical battery column (301), and each heat exchange section (11) is formed with a flow channel (110), each flow channel (110) having a fluid inlet (111) and a fluid outlet (112); and
a connecting tube assembly (2) comprising a fluid inlet branch tube (21) and a fluid outlet branch tube (22), wherein the fluid inlet branch tube (21) is in communication with a plurality of fluid inlets (111) of the plurality of heat exchange sections (11) in sequence, the fluid inlet branch tube (21) is formed with an inlet (211), the inlet (211) is configured to allow coolant to flow in, and the inlet (211) is disposed away from two heat exchange sections (11) respectively located at two side edges of the plurality of heat exchange sections (11), and wherein the fluid outlet branch tube (22) is in communication with a plurality of fluid outlets (112) of the plurality of heat exchange sections (11) in sequence, one end of the fluid outlet branch tube (22) is provided with an outlet (221), and the outlet (221) is configured to allow the coolant to flow out.

2. The liquid cooling assembly (10) according to claim 1, wherein the flow channel (110) of each heat exchange section (11) is curved, and the fluid inlet (111) and the fluid outlet (112) of each heat exchange section (11) are located at a same end of the heat exchange section (11).

3. The liquid cooling assembly (10) according to claim 1 or 2, wherein the fluid inlet (111) and the fluid outlet (112) of each heat exchange section (11) are spaced apart along a Z-direction, the Z-direction configured to be parallel to an axial direction of one or more cylindrical battery cells (3011) in the cylindrical battery column (301), and the fluid inlet (111) is disposed close to a bottom of the cylindrical battery column (301).

4. The liquid cooling assembly (10) according to claim 1, 2, or 3, wherein each heat exchange section (11) is configured to extend in a back-and-forth curved manner along the X-direction such that the heat exchange section (11) is formed with a plurality of arc segments (113) and the plurality of arc segments (113) are configured to be thermally connected to a side wall of the cylindrical battery column (301).

5. The liquid cooling assembly (10) according to claim 4, wherein each of the plurality of arc segments (113) comprises two ends , and the two ends of the arc segment (113) are configured such that an angle θ is defined between two connecting lines each connecting an axis of a cylindrical battery cell (3011) in the cylindrical battery column (301) to a respective one of the two ends, where θ > 72°.

6. The liquid cooling assembly (10) according to claim 4 or 5, wherein each of the plurality of arc segments (113) is provided with a thermally conductive structural adhesive, and the arc segment (113) is thermally connected to the side wall of the cylindrical battery column (301) via the thermally conductive structural adhesive.

7. A battery module (1000), **characterized by** comprising at least two battery assemblies (100) spaced apart along a Z-direction, each of the at least two battery assemblies (100) comprising:
a substrate (20);
a cylindrical battery array (30) mounted on the substrate (20), the cylindrical battery array (30) comprising a plurality of cylindrical battery columns (301) spaced apart along an X-direction; and
a liquid cooling assembly (10) according to any one of claims 1 to 6 mounted on the substrate (20), wherein a respective one of the plurality of cylindrical battery columns (301) is mounted between two adjacent ones of the plurality of heat exchange sections (11), and each of the two adjacent heat exchange sections (11) is thermally connected to a side wall of the cylindrical battery column (301).

8. The battery module (1000) according to claim 7, wherein each cylindrical battery column (301) comprises a plurality of cylindrical battery cells (3011) arranged sequentially along a Y-direction, and a plurality of pressure relief valves (30111) are provided on a side of the plurality of cylindrical battery cells (3011) facing the substrate (20); and
wherein the substrate (20) is provided with a plurality of through holes (201), the plurality of through holes (201) are disposed opposite the plurality of pressure relief valves (30111) in one-to-one correspondence, and each of the plurality of through holes (201) is disposed opposite a respective one of the plurality of pressure relief valves (30111) along the Z-direction.

9. The battery module (1000) according to claim 8, further comprising a plurality of support sections (40); wherein a respective one of the plurality of support sections (40) is disposed between two adjacent ones of the at least two battery assemblies (100), and a cavity is provided in each support section (400); and wherein a side of each support section (40) facing the corresponding substrate (20) is provided with a plurality of connection holes in communication with the cavity, the plurality of connection holes are in one-to-one correspondence with and in communication with the plurality of through holes (201), and each support section (40) is further provided with an exhaust port (221) in communication with the cavity.

10. The battery module (1000) according to claim 9, wherein a height of the cavity along the Z-direction is H, where 4 mm ≤ H ≤ 10 mm.

11. The battery module (1000) according to any one of claims 7 to 10, further comprising:
a liquid cooling section (50), wherein a fluid storage cavity is formed within the liquid cooling section (50) and is configured to store the coolant, and the liquid cooling section (50) is configured with an inlet (211) and an outlet (221) which are in communication with the fluid storage cavity; and
a fluid delivery tube assembly (60) comprising an input tube (601) and an output tube (602), wherein the input tube (601) comprises a first input end (6011) and a plurality of first output ends (6012), the first input end (6011) is in communication with the outlet (221), and the plurality of first output ends (6012) are respectively in communication with inlets (211); and wherein the output tube (602) comprises a second output end (6021) and a plurality of second input ends (6022), the second output end (6021) is in communication with the inlet (211), and the plurality of second input ends (6022) are respectively in communication with outlets (221).

12. The battery module (1000) according to claim 11, wherein the input tube (601) comprises an input main tube (6013) and a plurality of input branch tubes (6014), one end of the input main tube (6013) is formed with the first input end (6011), the input main tube (6013) is in communication with one end of each of the plurality of input branch tubes (6014), and another end of each of the plurality of input branch tubes (6014) is formed with a respective one of the plurality of first output ends (6012), wherein a diameter of each of the plurality of input branch tubes (6014) is smaller than a diameter of the input main tube (6013).

13. The battery module (1000) according to claim 11 or 12, wherein the output tube (602) comprises an output main tube (6023) and a plurality of output branch tubes (6024), one end of the output main tube (6023) is formed with the second output end (6021), the output main tube (6023) is in communication with one end of each of the plurality of output branch tubes (6024), and another end of each of the plurality of output branch tubes (6024) is formed with a respective one of the plurality of second input ends (6022), wherein a diameter of each of the plurality of output branch tubes (6024) is smaller than a diameter of the output main tube (6023).

14. The battery module (1000) according to any one of claims 7 to 13, wherein the substrate (20), the two adjacent heat exchange sections (11), and a respective cylindrical battery column (301) jointly define a housing space (3), and the housing space (3) is filled with a thermal insulation medium.

15. The battery module (1000) according to any one of claims 7 to 13, wherein a limiting structure is further provided between the substrate (20) and the heat exchange section (11), and the limiting structure comprises a limiting slot (701) and a limiting protrusion (702) adapted to the limiting slot (701), and wherein one of the limiting slot (701) and the limiting protrusion (702) is disposed on the substrate (20), and another of the limiting slot (701) and the limiting protrusion (702) is disposed at the heat exchange section (11).

16. A battery pack, **characterized by** comprising a battery module (1000) according to any one of claims 7 to 15.
